# EUROPEAN PATENT APPLICATION

(11) **EP 3 086 214 A1**
(43) Date of publication of application: **26.10.2016**
(21) Application number: 14878535.5
(22) Date of filing: 27.05.2014
(51) Int. Cl.: G06F 3/0481

(54) **DISPLAY CONTROL METHOD AND SYSTEM FOR A TOUCHSCREEN INTERFACE**

(30) Priority: 20.01.2014 CN 201410026267
(71) Applicant: ZTE Corporation, Shenzhen, Guangdong 518057 (CN)
(72) Inventor: LIU, Lizhang, Shenzhen Guangdong 518057 (CN); XUE, Tao, Shenzhen Guangdong 518057 (CN)
(74) Representative: Awapatent AB
(86) International application number: PCT/CN2014/078554
(87) International publication number: WO 2015/106519

(57) **Abstract**

A display control method and device for a touch screen interface, and the method includes: if it is detected that a user touches a switch-screen control, switching an activated application on a floating screen to be displayed on a main screen, and switching a main screen interface to be displayed in one floating application window of the floating screen; and if it is detected that a user touches a split-screen control, displaying the activated application on the floating screen and the main screen interface on the floating screen in a split-screen manner.

## Description

### Technical Field

The present invention relates to the technical field of display control for a touch screen interface, in particular to a display control method and system for a touch screen interface.

### Background of the Related Art

For a mobile terminal which only supports a single window, a screen of the mobile terminal only supports one application to control screen for displaying information at any moment.

With the continuous enrichment of mobile terminal applications, being capable of performing multitask processing has already become a basic function of a smart mobile terminal. With the continuous upgrading of the mobile terminal's hardware and operating system, it has been possible to support multiple tasks through multiple windows.

Various application windows which are opened after a multi-window function of the mobile terminal is enabled are usually displayed on a floating screen in a split-screen or floating manner. Herein a split-screen display means that two or more application windows respectively occupy a portion of the screen, and any two application windows are not overlapped and each application window is variable in size but cannot be moved. A floating display means that two or more application windows are displayed on the same screen in a layered manner, and the application windows can be partially or fully overlapped. And each application window not only is variable in size, but also can be moved, and only one application window can be in an activate state at any moment.

At present, on the mobile terminal, after the multi-window function is enabled, all applications displayed on the floating screen can be conveniently switched. However, the current mobile terminal does not have a function of realizing the switching between applications on the floating screen and applications which are displayed on a main screen before the multi-window function is enabled.

### Summary of the Invention

The technical problem to be solved by the embodiments of the present invention is to provide a display control method and system for a touch screen interface, which can realize the switching display between an application on a floating screen and a main screen interface, or split-screen display of the application on the floating screen and the main screen interface in the same screen.

In order to solve the above-mentioned technical problem, the following technical solution is adopted:
A display control method for a touch screen interface includes:
   if it is detected that a user touches a switch-screen control, switching an activated application on a floating screen to be displayed on a main screen, and switching a main screen interface to be displayed in one floating application window of the floating screen; and
   if it is detected that a user touches a split-screen control, displaying an activated application on the floating screen and the main screen interface on the floating screen in a split-screen manner.

Alternatively, the switch-screen control and the split-screen control are controls in a toolbar of the floating application window.

Alternatively, the main screen interface includes a standby interface when a multi-window function is not enabled or an application interface of a certain application when the multi-window function is not enabled.

Alternatively, the step of switching a main screen interface to be displayed in one floating application window of the floating screen includes:
switching the main screen interface to be displayed in a floating application window, currently in an active state, of the floating screen.

A display control device for a touch screen interface includes a switch-screen processing module and a split-screen processing module, herein:
the switch-screen processing module is configured to, if it is detected that a user touches a switch-screen control, switch an activated application on a floating screen to be displayed on a main screen, and switch a main screen interface to be displayed in one floating application window of the floating screen; and
the split-screen processing module is configured to, if it is detected that a user touches a split-screen control, display an activated application on the floating screen and the main screen interface on the floating screen in a split-screen manner.

Alternatively, the switch-screen control and the split-screen control are controls in a toolbar of the floating application window.

Alternatively, the main screen interface includes a standby interface when a multi-window function is not enabled or an application interface of a certain application when the multi-window function is not enabled.

Alternatively, the switch-screen control module is configured to switch a main screen interface to be displayed in one floating application window of the floating screen according to the following method:
switching the main screen interface to be displayed in a floating application window, currently in an active state, of the floating screen.

Compared with related arts, by newly adding the switch-screen and split-screen controls in the floating application window, the display control method and system for the touch screen interface in the technical solution can realize the switching display between the application on the floating screen and the main screen interface, or the split-screen display of the application on the floating screen and the main screen interface in the same screen.

### Brief Description of Drawings

Fig. 1 is a flowchart of a display control method for a touch screen interface according to the embodiment of the present invention;
Fig. 2 is a schematic diagram of switching between a floating screen application and a main screen interface according to the embodiment of the present invention;
Fig. 3 is a schematic diagram of split-displaying a floating screen application and a main screen interface according to the embodiment of the present invention;
Fig. 4 is a structural schematic diagram of a display control system for a touch screen interface according to the embodiment of the present invention.

### Preferred Embodiments of the Invention

The embodiments of the present invention will be described below in detail in combination with the drawings. It needs to be stated that the embodiments of the present invention and the features in the embodiments can be combined with one another under the situation of no conflict.

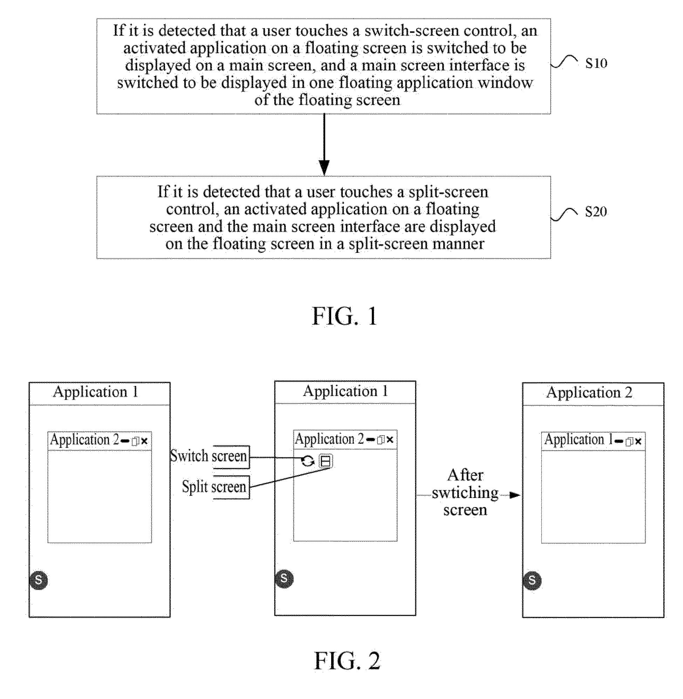

As shown in Fig. 1, the embodiment of the present invention provides a display control method for a touch screen interface, which includes:
In S10, if it is detected that a user touches a switch-screen control, an activated application on a floating screen is switched to be displayed on a main screen, and a main screen interface is switched to be displayed in one floating application window of the floating screen; and
In S20, if it is detected that a user touches a split-screen control, an activated application on the floating screen and the main screen interface are displayed on the floating screen in a split-screen manner.

The method may further include the following features:
The floating screen is a display screen on which each application window is located after a multi-window function is enabled, and the main screen is a display screen of a mobile terminal when the multi-window function is not enabled.

The main screen interface includes a standby interface when the multi-window function is not enabled or an application interface of a certain application when the multi-window function is not enabled.

The switch-screen control and the split-screen control are controls in a toolbar of the floating application window.

The step of switching the main screen interface to be displayed in one floating application window of the floating screen includes: the main screen interface is switched to be displayed in a floating application window, currently in an activate state, of the floating screen.

The step of displaying the activated application activated on the floating screen and the main screen interface on the floating screen in the split-screen manner includes: the activated application activated on the floating screen and the main screen interface are displayed on the floating screen in the split-screen manner, and one of the originally activated application on the floating screen and the main screen interface is enabled to be in an activate state.

The controls of the floating application window further include the controls of window maximization, window minimization, window size adjustment and window closing.

The multi-window function is enabled/disabled through a shortcut function soft key.

After the multi-window function is enabled, the user may open a plurality of applications, and the windows of all applications coexist on the floating screen, but only one application window is in an activate state at any moment.

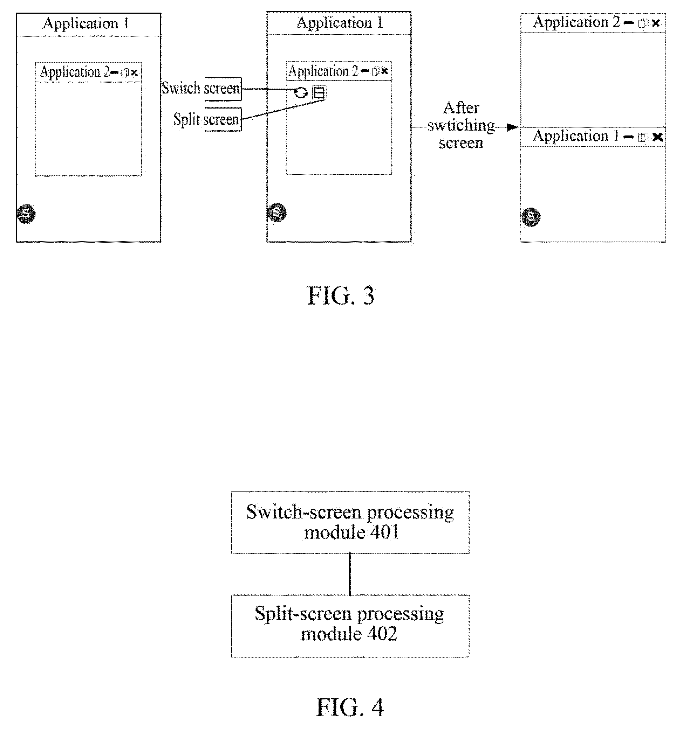

An application example will be given below:
The user opens an application 1 under the situation that the multi-window function is not enabled, and the application 1 is displayed on a main screen (a standby screen) in a full-screen manner. Then, the user opens the multi-window function under the situation that the application 1 is not closed (for example, the user touches the shortcut function soft key for enabling/disabling the multi-window function, which is shown as key S in Fig. 2 and Fig. 3), an application 2 is opened, the application 2 is displayed in one floating application window on the floating screen, and the window of the application 2 is in an activate state.

As shown in Fig. 2, if a user touches the switch-screen control on the toolbar of the window of the application 2, the application 2 is moved to the main screen and is displayed in a full-screen manner, the application 1 is moved into one floating application window on the floating screen and is displayed therein, and the application 1 is in an activate state.

As shown in Fig. 3, if a user touches the split-screen control on the toolbar of the window of the application 2, the application 1 is moved into one floating application window on the floating screen and is displayed therein, the floating application window of the application 1 and the floating application window of the application 2 equally share the floating screen, the application 2 is located on the upper half screen and is in an activate state, and the application 1 is located on the lower half screen and is not in the activate state.

As shown in Fig. 4, the embodiment of the present invention provides a display control system for a touch screen interface, which includes a switch-screen processing module 401 and a split-screen processing module 402, herein:
the switch-screen processing module 401 is configured to, if it is detected that a user touches a switch-screen control, an activated application on a floating screen is switched to be displayed on a main screen, and a main screen interface is switched to be displayed in one floating application window of the floating screen; and
the split-screen processing module 402 is configured to, if it is detected that the user touches a split-screen control, the activated application on the floating screen and the main screen interface are displayed on the floating screen in a split-screen manner.
The display control system may further include the following features:
   The floating screen is a display screen on which each application window is located after a multi-window function is enabled, and the main screen is a display screen of a mobile terminal when the multi-window function is not enabled.

The main screen interface includes a standby interface when the multi-window function is not enabled or an application interface of a certain application when the multi-window function is not enabled.

The switch-screen control and the split-screen control are controls in a toolbar of the floating application window.

The step of switching the main screen interface to be displayed in one floating application window of the floating screen includes: the main screen interface is switched to be displayed in a floating application window, currently in an activate state, of the floating screen.

The split-screen processing module 402 is configured to display the activated application on the floating screen and the main screen interface on the floating screen in the split-screen manner according to the following method: the split-screen processing module displays the activated application on the floating screen and the main screen interface on the floating screen in the split-screen manner, and enables one of the originally activated application on the floating screen and the main screen interface to be in an activate state.

The controls of the floating application window further include the controls of window maximization, window minimization, window size adjustment and window closing.

By newly adding the switch-screen and split-screen controls in the floating application window, the display control method and system for the touch screen interface provided by the embodiments can realize the switching display between the applications on the floating screen and the main screen interface, or the split-screen display of the applications on the floating screen and the main screen interface in the same screen.

One skilled in the art can understand that all or partial steps in the above-mentioned methods can be completed by relevant hardware instructed by a program, and the program can be stored in a computer readable storage medium such as a read only memory, a magnetic disk or a compact disk, etc. Alternatively, all or partial steps of the above-mentioned embodiments can also be implemented by using one or more integrated circuits. Correspondingly, each module/unit in the above-mentioned embodiments can be implemented by means of hardware, and can also be implemented by means of a software function module. The present invention is not limited to combinations of hardware and software in any specific form.

It needs to be stated that the present invention may have other various embodiments. One skilled in the art can make various corresponding modifications and variations according to the present invention without departing from the rule and essence of the present invention. However, all these corresponding modifications and variations shall also belong to the protection scope of claims appended to the present invention.

### Industrial Applicability

By newly adding the switch-screen and split-screen controls in the floating application window, the display control method and system for the touch screen interface in the technical solution can realize the switching display between the applications on the floating screen and the main screen interface, or the split-screen display of the applications on the floating screen and the main screen interface in the same screen. Therefore, the present invention has very great industrial applicability.

## Claims

1. A display control method for a touch screen interface, the method comprising:
if that a switch-screen control is touched by a user is detected, switching an activated application on a floating screen to be displayed on a main screen, and switching a main screen interface to be displayed in one floating application window of the floating screen; and
if that a user touches a split-screen control is detected, displaying an activated application on the floating screen and the main screen interface in a split-screen manner on the floating screen.

2. The display control method according to claim 1, wherein:
the switch-screen control and the split-screen control are controls in a toolbar of the floating application window.

3. The display control method according to claim 1, wherein:
the main screen interface comprises a standby interface when a multi-window function is not enabled or an application interface of a certain application when the multi-window function is not enabled.

4. The display control method according to claim 1, wherein the step of switching a main screen interface to be displayed in one floating application window of the floating screen comprises:
switching the main screen interface to be displayed in a floating application window, currently in an active state, of the floating screen.

5. A display control device for a touch screen interface, comprising a switch-screen processing module and a split-screen processing module, wherein:
the switch-screen processing module is configured to, if that a switch-screen control is touched by a user is detected, switch an activated application on a floating screen to be displayed on a main screen, and switch a main screen interface to be displayed in one floating application window of the floating screen; and
the split-screen processing module is configured to, if that a user touches a split-screen control is detected, display an activated application on the floating screen and the main screen interface in a split-screen manner on the floating screen.

6. The display control device according to claim 5, wherein:
the switch-screen control and the split-screen control are controls in a toolbar of the floating application window.

7. The display control device according to claim 5, wherein:
the main screen interface comprises a standby interface when a multi-window function is not enabled or an application interface of a certain application when the multi-window function is not enabled.

8. The display control device according to claim 5, wherein the switch-screen control module is configured to switch a main screen interface to be displayed in one floating application window of the floating screen according to the following method:
switching the main screen interface to be displayed in a floating application window, currently in an active state, of the floating screen.
